# EUROPÄISCHE PATENTSCHRIFT

(11) **EP 0 406 243 B1**
(45) Veröffentlichungstag und Bekanntmachung des Hinweises auf die Patenterteilung: **01.09.1993**
(21) Anmeldenummer: 89901450.0
(22) Anmeldetag: 25.01.1989
(51) Int. Cl.: A61C 13/225

(54) **VERBINDUNGSELEMENT FÜR DIE ZAHNPROTHETIK**
CONNECTING ELEMENT FOR DENTAL PROSTHESES
ELEMENT DE CONNECTION POUR PROTHESES DENTAIRES

(30) Priorität: 26.01.1988 CH 251/88
(43) Veröffentlichungstag der Anmeldung: 09.01.1991
(73) Patentinhaber: FRISCHHERZ, Rolf, CH-4900 Langenthal (CH)
(72) Erfinder: FRISCHHERZ, Rolf, CH-4900 Langenthal (CH)
(74) Vertreter: Seehof, Michel
(86) Internationale Anmeldenummer: CH8900015
(87) Internationale Veröffentlichungsnummer: WO8906941

(56) Entgegenhaltungen:
- EP-A- 0 139 224
- DE-A- 3 522 605
- FR-A- 2 085 013

## Beschreibung

Die vorliegende Erfindung bezieht sich auf ein Verbindungselement für die Zahnprothetik zwischen einem in einem Implantat oder natürlichen Zahn verankerten Teil und einer Prothese, wobei das Verbindungselement ein Doppelgelenkteil enthält, dessen eines Ende als kugelförmiger Kopf ausgebildet ist.

Ein solches Element ist aus der FR-A-2 085 013 bekannt, wobei das andere Ende des Verbindungslementes in einer Ausführungsform ebenfalls als kugelförmiger Kopf ausgebildet ist. Falls beide Gelenke kugelförmige Köpfe aufweisen, besteht die Gefahr eines Abkippens des zu verankernden Teils.

Die DE-A-3 522 605 offenbart eine Druckknopf-Kupplung mit einem kugelförmigen Gelenk, in welchem der Knopf in vier Segmente aufgeteilt ist. Dieses eine Gelenk ermöglicht nur eine beschränkte Druckverteilung und Anpassung der Zahnprothese.

Die EP-A-0 139 224 offenbart ein Verbindungselement mit einem kugelförmigen Gelenk, das auch nur eine beschränkte Druckverteilung und Anpassung der Zahnprothese erlaubt.

Es ist davon ausgehend Aufgabe der vorliegenden Erfindung, ein Verbindungselement für die Zahnprothetik zu schaffen, das insbesondere bei Kaubewegungen eine gleichmässigere Druckverteilung und einen festeren Halt der Prothese ermögicht. Diese Aufgabe wird mit einem in Patentanspruch 1 beschriebenen Verbindungselement gelöst.

Die Erfindung wird im folgenden anhand einer Zeichnung von Ausführungsbeispielen näher erläutert.
- Figur 1: zeigt in einem ersten Ausführungsbeispiel im Schnitt ein Verbindungselement zwischen einem Steg und einer Prothese,
- Figur 2: zeigt im Schnitt das Verbindungselement von Fig. 1 zwischen einem Zahn und einer Prothese,
- Figur 3: zeigt im Schnitt ein zweites Ausführungsbeispiel eines Verbindungselementes zwischen einem Zahnwurzelstift und einer Prothese, und
- Figur 4: zeigt eine Ausführungsvariante zu Figur 3.

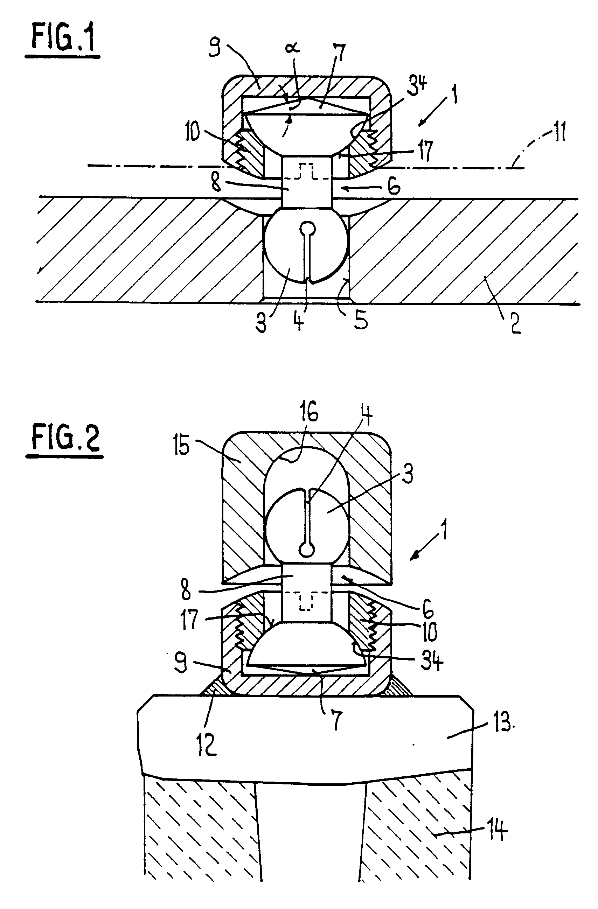

Man erkennt in Figur 1 ein erstes Ausführungsbeispiel eines Verbindungselementes 1, das in einem Steg 2 angeordnet ist. Das Verbindungselement 1 ist als Doppelgelenk ausgebildet und weist einen kugelförmigen Kopf 3 mit Aktivierungsschlitz 4 auf, wobei dieser kugelförmige Kopf das erste Gelenk bildet. Der kugelförmige Kopf 3 steckt in einer Bohrung 5 im Steg, die diesen Kopf führt, sodass dieser frikativ in der Bohrung gehalten ist und sich darin bewegen kann. Das andere Ende des Doppelgelenkteils 6, das Zweite Gelenk, ist als Konus 7 ausgebildet, der eine Steigung α von bis zu 15^{o} aufweisen kann. Durch solche verhältnismässig flache Winkel wird verhütet, dass die Prothese gegenüber dem Steg zu stark kippen kann. Der Konus 7 ist an seiner halbkreisförmigen Unterseite 17, die in den Uebergangsteil 8 mündet, in einer Gelenkkappe 9 gehalten, die auf ihrer Innenseite 10 eben ist, sodass der Konus darauf abrollen kann. Der Konus und damit das Doppelgelenkteil ist in der Gelenkkappe mit einem Gewindering 10 gehalten, dessen innere Oberkante 34 eine der Unterseite 17 entsprechende Krümmung aufweist. Die Gelenkkappe 9 dient gleichzeitig als Prothesengehäuse, an welchem die Prothese befestigt wird. In Fig. 1 ist noch die Schleimhaut mittels der strichpunktierten Linie 11 angedeutet. Der Steg 2 wird mittels bekannter Technik im Unter- oder Oberkiefer befestigt. Eine oben beschriebene Verbindung zwischen einem Steg und einer Prothese ist insbesondere bei langen und über Eck geführten Stegen vorteilhaft, da dort eine gleichmässige Auflage, resp. Druckverteilung bei vorbekannten Befestigungstechniken, wenn überhaupt, nur sehr schwer durchführbar ist.

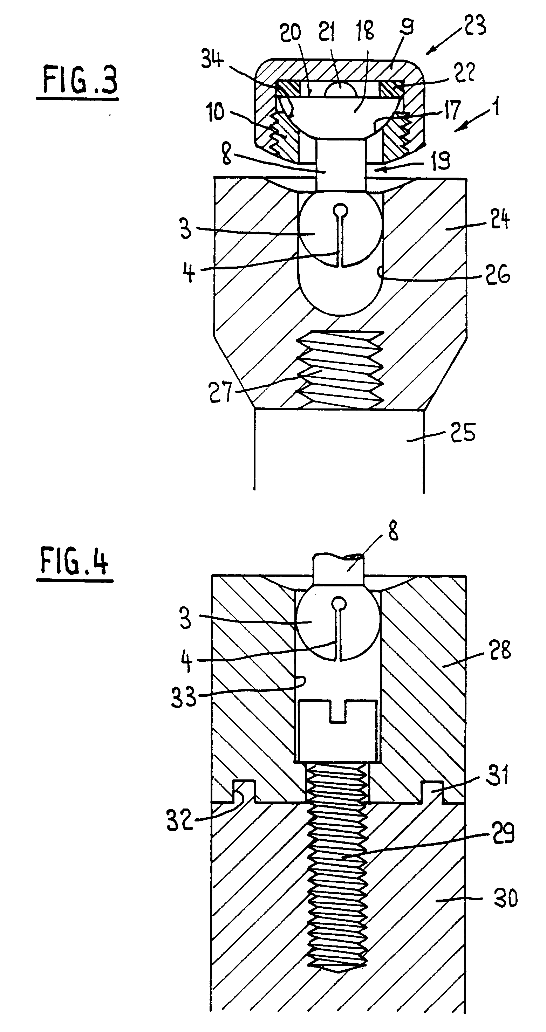

In Figur 2 erkennt man, dass man dasselbe Verbindungselement 1 auch in umgekehrter Position einbauen kann, d.h., dass man die Gelenkkappe 9 mit dem zu verankernden Teil verbinden kann und das Prothesenteil abnehmbar am kugelförmigen Kopf 3 befestigen kann. Die Gelenkkappe 9 des Verbindungselementes ist mittels eines geeigneten Lotes 12 mit einer Stiftkappe 13 eines Stiftzahnes 14 verlötet. Statt mit der Kappe eines Stiftzahnes könnte selbstverständlich die Gelenkkappe, bzw. das Verbindungselement, mit einem Wurzelkanalanker verbunden sein. Die nicht dargestellte Prothese ist über ein Prothesengehäuse 15 mit dem kugelförmigen Kopf 3 des Verbindungselementes verbunden, wobei die Oeffnung 16 einen solchen Durchmesser hat, dass der Kopf frikativ eingesetzt werden kann, d.h. dass es eine druckknopfartige Verbindung zwischen der Prothese und dem Verbindungselement bzw. Stiftzahn gibt. Wie aus den nachfolgenden Figuren 3 und 4 hervorgehen wird, ist es auch möglich, wie bereits eingangs erwähnt, das ganze System umzukehren, d.h. das Verbindungselement derart anzubringen, dass das Prothesengehäuse 15 entweder an der Stiftkappe 13 angelötet wird und die Gelenkkappe 9 als Prothesengehäuse wirkt oder dass der kugelförmige Kopf 3 direkt, entweder in der Stiftkappe oder im Anker, lösbar aufgenommen wird.

In Figur 3 ist eine Ausführungsvariante des Verbindungselementes dargestellt, wobei die Variante das zweite Gelenk betrifft, während das erste, der kugelförmige Kopf 3, dasselbe ist wie bei der ersten beschriebenen Ausführungsform gemäss Figur 1 und 2. Neben dem Kopf 3 sind das Uebergangsteil 8 zwischen den beiden Gelenken sowie das etwa halbkreisförmig aussehende Unterteil 17 des zweiten Gelenkes die gleichen wie bei der ersten Ausführungsform. Das zweite Gelenk 18 des Doppelgelenkteiles 19 wird jedoch in diesem Ausführungsbeispiel nicht durch einen Konus gebildet, sondern durch eine ebene Fläche 20, die in ihrer Mitte eine Stützhalbkugel 21 aufweist. Der Weg des Ausschlages des zweiten Gelenkes gegenüber der Gelenkkappe 9 bzw. dem Prothesengehäuse wird durch einen Einlagering 22 bestimmt bzw. begrenzt, der je nach gewünschtem Ausschlag eine bestimmte Dicke oder Härte aufweisen kann. Das Doppelgelenkteil 19 wird, wie im vorhergehenden Beispiel, von einem Verschlussring 10, der an der Unterseite 17 angreift, gegen den Einlagering 22 gepresst.

Das Verbindungselement 23, resp. dessen kugelförmiger Kopf 3, steckt in einem Anpassungsstück 24, das auf dem Kopf 25 eines Ankers aufgeschraubt werden kann, In dieses Anpassungsstück 24 könnte selbstverständlich auch das Verbindungselement 1 eingepasst werden. Die Bohrung 26 des Anpassungsstückes 24 ist selbstverständlich derart bemessen, dass der Kopf 3 des Verbindungselementes mit der nötigen Friktion darin festgehalten ist. Das Anpassungsstück 24 ist über einen Gewindezapfen 27 mit dem Anker 25 verschraubt, wobei dieser Anker 25 auch eine Stiftkappe oder dergleichen sein kann.

In einer nicht gezeichneten Ausführungsvariante wird die ebene Oberseite des zweiten Gelenkes gegen das Prothesengehäuse oder gegen die Gelenkkappe festgeschraubt, und das zweite Gelenk wird durch die Elastizität des Uebergangsteils 8 bestimmt, der aus einem entsprechend elastischen Kunststoff besteht. Dabei kann die Unterseite des zweiten Gelenkes entweder halbkreisförmig sein wie vorgehend oder eben ausgebildet sein und der Gewindering oben ebenfalls eben.

In der Ausführungsvariante gemäss Figur 4 ist das Anpassungsstück 28 über eine Schraube 29 mit dem Unterteil, d.h. dem Anker 30, verbunden, wobei es zusätzlich gegenüber Lateralverschiebungen durch eine umlaufende Feder 31, die in einer umlaufenden Nut 32 passt, gesichert ist. Die Bohrung 33, durch welche die Sicherungsschraube 29 eingeführt und festgeschraubt werden kann, entspricht der Bohrung 26 und ist dem Durchmesser des Kopfes 3 des Verbindungselements 1 oder 23 angepasst.

Als Materialien für die verschiedenen Elemente werden die in der Zahntechnik üblichen Materialien, wie beispielsweise Edelmetallegierungen, in der Regel auf Goldbasis sowie Titan, verwendet. Für das Doppelgelenkteil kann auch, wie bereits erwähnt, ein geeigneter Kunststoff verwendet werden, Wie aus der Beschreibung der Figuren hervorgeht, ist es wesentlich, dass das Verbindungselement ein Doppelgelenkstück aufweist, wobei das eine Gelenk stets der kugelförmige Kopf 3 ist, der einen Aktivierungsschlitz aufweist, während das andere Gelenk verschieden ausgebildet sein kann und entweder durch Abrollen eines Kegels auf einer ebenen Fläche gebildet wird oder durch die Elastizität des Einlagerings oder des Uebergangsteiles 8.

## Patentansprüche

1. Verbindungselement für die Zahnprotetik zwischen einem in einem Implantat oder natürlichen Zahn verankerten Teil (2, 13, 24, 28) und einer Prothese, wobei das Verbindungselement (1, 23) ein Doppelgelenkteil (6, 19) enthält, dessen eines Ende als kugelförmiger Kopf (3) ausgebildet ist und dessen anderes Ende das zweite Gelenk bildet, dadurch gekennzeichnet, dass das zweite Gelenk als Konus (7) mit einem Steigungswinkel (α) von 1 bis 15° ausgebildet ist, der auf der ebenen Innenseite einer Gelenkkappe oder eines Prothesengehäuses abläuft, und der kugelförmige Kopf (3) mit Aktivierungsschlitz (4) ausgebildet ist.

2. Verbindungselement nach Anspruch 1 dadurch gekennzeichnet, dass sich dem kugelförmigen Kopf (3) ein Uebergangsteil (8) anschliesst, das in das andere Ende (7, 18) über eine halbkugelförmige Unterseite (17) übergeht und dass das Doppelgelenkteil durch einen Verschlussring (10) in der Gelenkkappe (9) oder im Prothesengehäuse (15) gehalten ist, der an seiner der Unterseite (17) des anderen Teils zugewandten Seite eine dieser Unterseite entsprechende Ausnehmung (34) aufweist.

3. Verbindungselement nach Anspruch 1 oder 2, dadurch gekennzeichnet, dass das andere Ende (18) eine ebene Fläche (20) mit einer in der Mitte angeordneten Halbkugel (21) aufweist, die aussen gegen einen Einlagering (22) in der Gelenkkappe (9) oder im Prothesengehäuse (15) gehalten ist.

4. Verbindungselement nach einem der Ansprüche 1 bis 3, dadurch gekennzeichnet, dass der verankerte Teil ein Steg (2) oder ein an einem Anker (25, 30) befestigtes Anpassungsstück (24, 28) ist, in dem eine Bohrung (5, 26, 33) zur abnehmbaren und frikativen Befestigung des kugelförmigen Kopfes (3) des Verbindungselementes angeordnet ist und dass die Gelenkkappe (9) als Prothesengehäuse zur Befestigung der Zahnprothese dient.

5. Verbindungselement nach einem der Ansprüche 1 bis 3, dadurch gekennzeichnet, dass der verankerte Teil eine Stiftkappe (13) eines Stiftzahnes (14) ist und die Gelenkkappe (9) mit der Stiftkappe (13) verlötet ist, und dass der kugelförmige Kopf (3) des Verbindungselementes (1) abnehmbar und frikativ in einem Prothesengehäuse (15) gehalten ist.

## Claims

1. Connecting element for dental prosthetics, between a part (2, 13, 24, 28) which is anchored in an implant or a natural tooth and a prosthesis, said connecting element (1, 23) comprising a double-jointed portion (6, 19) one end of which is shaped as a spherical head (3) and the other end of which forms the second joint, characterised in that said second joint is in the form of a cone (7) having a slant angle (α) of 1 to 15° which rolls on the flat internal side of a joint cap, and in that an activating slot (4) is formed in said spherical head (3).

2. Connecting element according to claim 1, characterised in that said spherical head (3) is followed by a transitional portion (8) which connects to said other end (7, 18) by a hemispherical underside (17), and in that said double joint portion is held in said joint cap (9) or in the prosthesis housing (15) by a locking ring (10) which is provided on its side facing the underside (17) of said other part with a recess corresponding to said underside.

3. Connecting element according to claim 1 or 2, characterised in that said other end (18) comprises a flat surface (20) with a hemisphere (21) disposed in the centre thereof, the external side of which is held against an annular insert (22) in said joint cap (9) or in the prosthesis housing (15).

4. Connecting element according to one of claims 1 to 3, characterized in that the anchored part is a bridge or an adaptor piece (24, 28) which is secured to an anchor (25, 30), and is provided with a bore (5, 26, 33) for detachable and frictional attachment of said spherical head (3) of the connecting element, and in that said joint cap (9) serves a a prosthesis housing for securing the dental prosthesis.

5. Connecting element according to any one of claims 1 to 3, characterised in that the anchored part is a post cap (13) of a tooth replacement (14) and said joint cap (9) is soldered to said pin cap (13), and in that said spherical head (3) of the connecting element (1) is detachably und frictionally held in a prosthesis housing (15).

## Revendications

1. Elément connecteur pour la prothèse dentaire, entre une partie (2, 13, 24, 28) ancrée dans un implant ou une dent naturelle et une prothèse, ledit élément connecteur (1, 23) comprenant une pièce (6, 19) doublement articulée dont l'une des extrémités est en forme de tête (3) sphérique et l'autre extrémité forme la deuxième articulation, caractérisé en ce que ladite deuxième articulation est en forme de cône (7) ayant une obliquité (α) de 1 à 15° et qui roule sur la face intérieure plate d'un capuchon pivotant ou d'une cage de prothèse, et que la tête sphérique est réalisée avec une fente d'activation (4).

2. Elément connecteur selon la revendication 1, caractérisé en ce que la tête sphérique (3) est suivie par une partie transitoire (8) reliée à ladite autre extrémité (7, 18) par une partie inférieure (17) hémisphérique, et que la pièce à double articulation est tenue dans le capuchon pivotant (9) ou dans la cage de prothèse par un anneau de fermeture (10) dont le côté en regard de la partie inférieure (17) de l'autre pièce présente un évidement correspondant à cette partie inférieure.

3. Elément connecteur selon la revendication 1 ou 2, caractérisé en ce que ladite autre extrémité (18) présente une face plate (20) au centre de laquelle est disposée une hémisphère et l'extérieur de laquelle est maintenue dans le capuchon pivotant (9) ou dans la cage de prothèse (15) contre une insertion annulaire (22).

4. Elément connecteur selon l'une quelconque des revendications 1 à 3, caractérisé en ce que ladite partie ancrée est un pont (2) ou une pièce d'adaptation (24, 28) fixée à un ancre (25, 30), cette partie présentant un alésage (5, 26, 33) pour l'attache amovible et par friction de la tête hémisphérique (3), et en ce que le capuchon pivotant (9) sert de cage de prothèse pour la fixation de la prothèse dentaire.

5. Elément connecteur selon l'une quelconque des revendications 1 à 3, caractérisé en ce que la partie ancrée est un capuchon de tige (13) d'une dent artificielle (14) et que le capuchon pivotant (9) est soudé au capuchon de tige (13), et en ce que la tête sphérique (3) de l'élément connecteur (1) est tenue dans une cage de prothèse (15) de manière amovible et par friction.
